# EUROPEAN PATENT APPLICATION

(11) **EP 4 707 064 A1**
(43) Date of publication of application: **11.03.2026**
(21) Application number: 25185937.7
(22) Date of filing: 27.06.2025
(51) Int. Cl.: B60N 2/02, B60N 2/28

(54) **ELECTRIC CONTROL METHOD AND APPARATUS FOR SAFETY SEAT, AND SAFETY SEAT**

(30) Priority: 06.09.2024 CN 202411246484
(71) Applicant: Ningbo Baby First Baby Products Co., Ltd., Ningbo, Zhejiang 315412 (CN)
(72) Inventor: XU, Hao, Ningbo, Zhejiang, 315412 (CN)
(74) Representative: Lorenz Seidler Gossel Part. mbB

(57) **Abstract**

The present invention relates to the technical field of safety seats, and provides an electric control method and apparatus for a safety seat, and a safety seat. The safety seat includes a seat body, a base, and electric unit. The electric unit includes a first electric unit and a second electric unit. The method includes: controlling the first electric unit to operate; determining whether a first feedback signal corresponding to the first electric unit is received; determining a state of the first electric unit if the first feedback signal corresponding to the first electric unit is received; and determining that a first target action has been completed if the first electric unit is in a move-in-position state. By the present invention, the seat can be flexibly adjusted in different dimensions to meet diversified usage requirements of users.

## Description

### TECHNICAL FIELD

The present invention relates to the technical field of safety seats, and specifically to an electric control method and apparatus for a safety seat, and a safety seat.

### BACKGROUND

Nowadays, with the development of smart cockpit technologies for vehicles, the functions and modes of seats in vehicles are becoming more and more diversified, including functions such as the seat rotating to welcome an occupant when detecting that a door is opened, which significantly improves the comfort and convenience of adult occupants. However, the comfort and convenience of child occupants, especially in terms of the design and use of child safety seats, also need to be considered.

In practical use, the installation and use of safety seats face some challenges. For example, space for installing a child seat in the vehicle is limited, and after the safety seat is installed, the seating space is fixed and there is limited space for the movement of legs of the child occupant. Therefore, how to better meet the requirements on the comfort and safety of the child occupant in the case of limited space in the vehicle is still a technical problem to be solved.

### SUMMARY

The problem to be solved by the present invention is to improve the ride comfort of a safety seat.

To solve the above problem, the present invention provides an electric control method for a safety seat. The safety seat includes a seat body, a base, and electric units. The electric units include a first electric unit and a second electric unit. The first electric unit is configured to drive the seat body to undergo a first one of a rotational movement and a translational movement relative to the base. The second electric unit is configured to drive the seat body to undergo a second one of the rotational movement and the translational movement relative to the base. The electric control method for the safety seat includes:
controlling the first electric unit to operate;
determining whether a first feedback signal corresponding to the first electric unit is received, where the first feedback signal corresponding to the first electric unit is a first in-position feedback signal indicating that the first electric unit reaches a first preset position and/or a first resistance feedback signal indicating that the first electric unit encounters a first resistance;
determining a state of the first electric unit when the first feedback signal corresponding to the first electric unit is received; and
determining that a first target action has been completed when the first electric unit is in a first move-in-position state.

Optionally, in an outward rotation mode, after the step of determining that the first target action has been completed when the first electric unit is in the first move-in-position state, the electric control method for the safety seat further includes:
controlling the second electric unit to operate;
determining whether a first feedback signal corresponding to the second electric unit is received, where the first feedback signal corresponding to the second electric unit is a second in-position feedback signal indicating that the second electric unit reaches a second preset position and/or a second resistance feedback signal indicating that the second electric unit encounters a second resistance;
determining a state of the second electric unit when the first feedback signal corresponding to the second electric unit is received; and
determining that a second target action has been completed when the second electric unit is in a second move-in-position state.

Optionally, in a reverse translation mode, the first electric unit is configured to drive the seat body to undergo the translational movement relative to the base, and the electric control method for the safety seat further includes:
determining whether the first electric unit reaches a set position, where the set position is set by a user or determined according to passenger information, and the first preset position is a preset fixed position; and
determining that the first target action has been completed when the first electric unit reaches the set position.

Optionally, the electric control method for the safety seat further includes:
in the reverse translation mode, determining whether the seat body is in a reverse installation state;
when the seat body is in the reverse installation state, performing the step of controlling the first electric unit to operate; and
when the seat body is not in the reverse installation state, outputting a reverse installation prompt, or controlling the second electric unit to operate to drive the seat body to enter the reverse installation state, and performing the step of controlling the first electric unit to operate.

Optionally, the step of determining the state of the first electric unit includes:
acquiring a second feedback signal corresponding to the first electric unit;
when the first feedback signal corresponding to the first electric unit is the first in-position feedback signal, determining that the second feedback signal corresponding to the first electric unit is a first movement feedback signal of the first electric unit, determining whether the first electric unit encounters the first resistance according to the first movement feedback signal, and when the first electric unit encounters the first resistance, determining that the first electric unit is in the first move-in-position state; and
when the first feedback signal corresponding to the first electric unit is the first resistance feedback signal, determining that the second feedback signal corresponding to the first electric unit is a first position feedback signal of the first electric unit, determining whether the first electric unit reaches the first preset position according to the first position feedback signal, and when the first electric unit reaches the first preset position, determining that the first electric unit is in the first move-in-position state; and
the step of determining the state of the second electric unit further includes:
acquiring a second feedback signal corresponding to the second electric unit;
when the first feedback signal corresponding to the second electric unit is the second in-position feedback signal, determining that the second feedback signal corresponding to the second electric unit is a second movement feedback signal of the second electric unit, determining whether the second electric unit encounters the second resistance according to the second movement feedback signal, and when the second electric unit encounters the second resistance, determining that the second electric unit is in the second move-in-position state; and
when the first feedback signal corresponding to the second electric unit is the second resistance feedback signal, determining that the second feedback signal corresponding to the second electric unit is a second position feedback signal of the second electric unit, determining whether the second electric unit reaches the second preset position according to the second position feedback signal, and when the second electric unit reaches the second preset position, determining that the second electric unit is in the second move-in-position state.

Optionally, the first movement feedback signal includes an electric current feedback signal and/or a rotational speed feedback signal of the first electric unit or the second electric unit; and the second movement feedback signal includes an electric current feedback signal and/or a rotational speed feedback signal of the second electric unit.

Optionally, the first position feedback signal is detected by a first sensor provided on the first electric unit or the second electric unit or by a second sensor provided on an electric operation path of the seat body; and the second position feedback signal is detected by a third sensor provided on the second electric unit or by a fourth sensor provided on the electric operation path of the seat body.

Optionally, the electric control method for the safety seat further includes:
acquiring shoulder height information of a passenger in the safety seat; and
determining whether to enter the reverse translation mode according to the shoulder height information, where when the shoulder height information is less than a preset value, it is determined to enter the reverse translation mode; and/or determining the set position according to the shoulder height information.

The present invention further provides an electric control apparatus for a safety seat. The electric control apparatus includes a computer-readable storage medium storing a computer program, and a processor. The computer program, when read and executed by the processor, achieves the electric control method for the safety seat.

The present invention further provides a child safety seat, including the electric control apparatus for the safety seat.

Compared with the prior art, the present invention at least has the following advantages.

The first electric unit and the second electric unit are respectively responsible for the rotation and translation of the seat body, so that the seat can be flexibly adjusted in different dimensions to meet diversified usage requirements of users. With the setting of the corresponding electric control logic including action control logic and feedback signal processing logic for the electric unit, the rotation and translation of the seat body can be controlled precisely and safely. Specifically, in the embodiments of the present invention, the first electric unit is controlled to start to move (e.g., rotate or translate), and it is determined whether a first feedback signal corresponding to the first electric unit is received during the movement of the first electric unit. The first feedback signal includes an in-position feedback signal and a resistance feedback signal. The in-position feedback signal indicates that the electric unit reaches a preset position. The resistance feedback signal indicates that the electric unit encounters an obstacle or a resistance force during movement. After the first feedback signal is received, an actual state of the first electric unit is further analyzed. If it is determined that the first electric unit is in the move-in-position state, it may be determined that a first target action has been completed. This process not only ensures that the seat body can precisely reach the preset position expected by the user, but also avoids misjudgment through the detection of the resistance feedback signal, thereby ensuring passenger safety.

### BRIEF DESCRIPTION OF THE DRAWINGS

FIG. 1 is a schematic flowchart of an embodiment of an electric control method for a safety seat according to the present invention.
FIG. 2 is a schematic diagram showing a seat body moved leftward according to an embodiment of the present invention.
FIG. 3 is a schematic diagram showing a seat body moved rearward according to an embodiment of the present invention.
FIG. 4 is a schematic flowchart of an embodiment of a rotational translation mode according to an embodiment of the present invention.
FIG. 5 is a schematic flowchart of an embodiment of a reverse translation mode according to an embodiment of the present invention.
FIG. 6 is a schematic diagram of an embodiment of an electric control system according to an embodiment of the present invention.

### DETAILED DESCRIPTION OF THE EMBODIMENTS

To make the objectives, technical features, and advantages of the present invention more comprehensible, specific embodiments of the present invention will be described in detail below with reference to the accompanying drawings. It should be understood that the drawings and embodiments of the present invention are for illustrative purposes only, and are not intended to limit the scope of protection of the present invention. As used herein, the terms such as "include," "comprise," and variants thereof are intended to cover a non-exclusive inclusion, i.e., mean "including, but not limited to"; the expression "an embodiment" or "one embodiment" means "at least one embodiment." The expression "another embodiment" means "at least one other embodiment.". The expression "some embodiments" means "at least some embodiments." The term "optionally" means "optional embodiments". Relevant definitions of other terms will be given in the following description.

An embodiment of the present invention discloses an electric control method for a safety seat. The electric control method is applied to a safety seat (or referred to a child safety seat) including a seat body, a base, and an electric unit. The seat body is a part for a child to sit in and lie on. The base is used for fixing the seat body to an interior of a vehicle, and is usually equipped with an ISOFIX interface or other form of fixing means to ensure that the safety seat can be firmly retained in place during a collision.

The electric unit includes a first electric unit and a second electric unit. The first electric unit is configured to drive the seat body to undergo a first one of a rotational movement and a translational movement relative to the base. The second electric unit is configured to drive the seat body to undergo the other of the rotational movement and the translational movement relative to the base. The first electric unit and the second electric unit may be mounted on a back or base of the child safety seat, which is not limited herein.

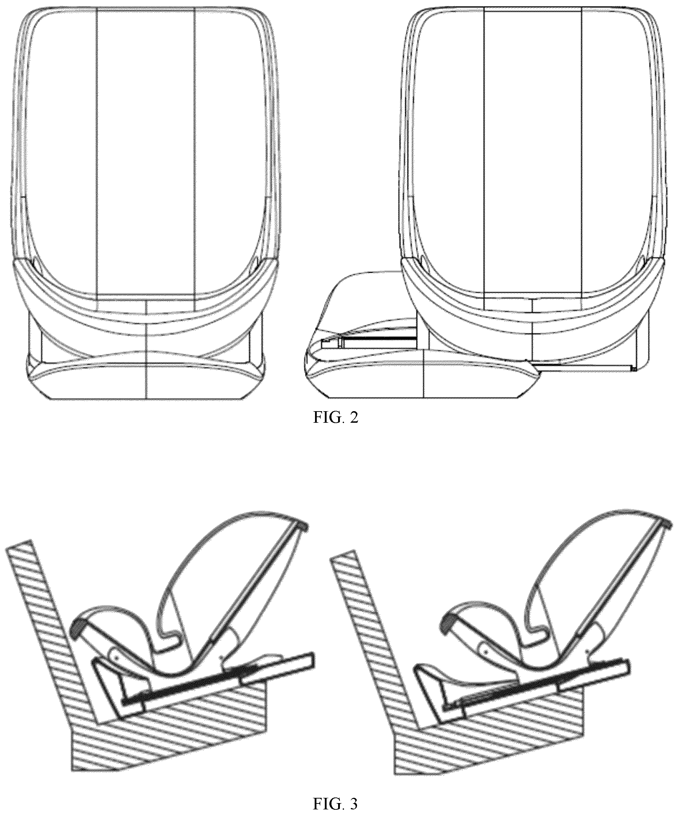

In an embodiment, the first electric unit includes a rotational movement drive motor, which is mounted on the base and is configured to drive, by a gear or other means, the seat body to rotate about a fixed axis, to cause the seat body to turn from a forward-facing orientation to a rear-facing orientation, making it convenient for a parent to put a child into the seat or carry a child out of the seat. The second electric unit includes a translational movement drive motor, which may also be mounted on the base and is configured to drive, through a guide rail, or a linear actuator, the seat body to move in a direction perpendicular to the axis of rotation of the seat body (e.g., FIG. 2 is a schematic diagram showing leftward movement and FIG. 3 is a schematic diagram showing backward movement), e.g., move forward, backward, leftward, or rearward, to adjust of the position of the seat to be closer to or further away from the door, making it convenient for the child to enter or exit the vehicle.

In another embodiment, the first electric unit includes a translational movement drive motor, and the second electric unit includes a rotational movement drive motor. Related functions of the translational movement drive motor and the rotational movement drive motor are as described above, so the details will not be described herein again.

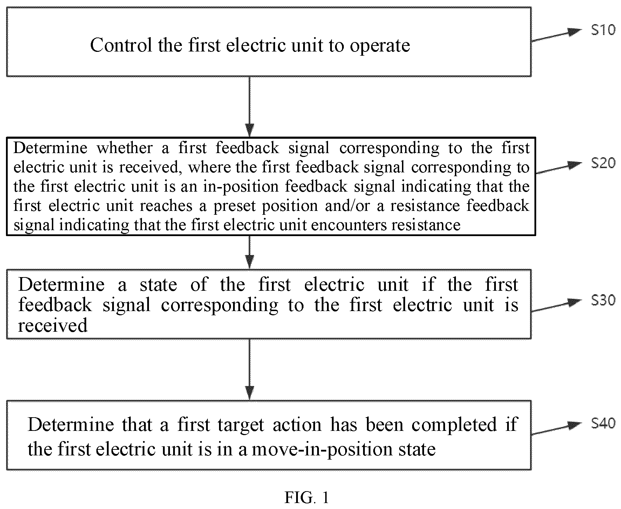

In an embodiment, as shown in FIG. 1, the electric control method for the safety seat of the present invention includes the following steps.

In step S10, the first electric unit is controlled to operate.

The first electric unit operates to drive the seat body to undergo a rotational movement or translational movement.

In step S20, it is determined whether a first feedback signal corresponding to the first electric unit is received, where the first feedback signal corresponding to the first electric unit is an in-position feedback signal indicating that the first electric unit reaches a preset position and/or a resistance feedback signal indicating that the first electric unit encounters resistance.

Step S20 may be performed during execution of step S10. Whether the first feedback signal corresponding to the first electric unit is received may be determined in real time, or may be determined periodically under control of a timer. If no first feedback signal is received within a period of time, a fault prompt is output, and the first electric unit is controlled to stop operation.

The in-position feedback signal indicates that the first electric unit reaches the preset position, and may be detected by a first sensor provided on the first electric unit or by a second sensor provided on an electric operation path of the seat body.

The first sensor includes, but is not limited to, at least one of a grating, a coding disc, or a Hall sensor.

The grating and the coding disc may be mounted on a motor shaft or an actuator drive shaft of the first electric unit to determine the number of rotations of the first electric unit. The grating is used as an example for description below. In an embodiment, the first sensor is a grating. A fixed grating ruler may be mounted on a motor housing or at other positions stationary relative to the motor shaft. Then, a grating reading head is mounted on the motor shaft or the actuator drive shaft of the first electric unit, to rotate along with the rotation of the shaft. The reading head includes a light source and a photosensitive element to read engraved lines on the grating ruler. When the motor shaft or the actuator drive shaft rotates, the reading head mounted on the motor shaft or the actuator drive shaft emits light, receives the light reflected back from the grating ruler, detects a position change based on the reflected light, converts the detected optical signal to an electric signal, and calculates the number of rotations of the motor shaft or the actuator drive shaft according to the electric signal. As such, position detection is implemented. This embodiment is merely an optional embodiment of a grating-based scheme, and adjustments can be made in practice.

In another embodiment, the first sensor is a Hall sensor. The Hall sensor is mounted at a position in the motor housing which is close to a permanent magnet on a motor rotor. When the motor rotor rotates, the permanent magnet passes through the position of the Hall sensor. Each time the magnet approaches the Hall sensor, a magnetic field generated by the magnet causes a change in the potential difference in the Hall sensor, thus forming an electric signal. The number of rotations of the motor is determined based on the electric signal. As such, position detection is implemented.

The second sensor includes, but is not limited to, at least one of a micro switch, a photoelectric switch, or a reed switch.

In an embodiment, the second sensor is a micro switch. One or more key positions on the electric operation path of the seat body are selected. The micro switch is mounted on a mechanical frame at the one or more key positions, to ensure that an electrical contact of the micro switch can contact with a position on the seat body, so that when the first electric unit reaches the preset position, i.e., drives the seat body to a specific position, the seat body comes into contact with the electrical contact of the micro switch to cause the micro switch to switch on or off to generate the in-position feedback signal.

In an embodiment, the second sensor is a photoelectric switch. One or more key positions on the electric operation path of the seat body are selected. The photoelectric switch is mounted on a mechanical frame at the one or more key positions. The photoelectric switch includes a transmitting end and a receiving end. When the first electric unit reaches the preset position, the seat body moves to a specific position and blocks light from the photoelectric switch, and the receiving end cannot detect the light.

In an embodiment, the second sensor is a reed switch. One or more key positions on the electric operation path of the seat body are selected. The reed switch is fixedly mounted at the one or more key positions. A magnet may be mounted at one or more positions on the seat body. When the first electric unit reaches the preset position, the seat body moves to a specific position, and the magnet approaches the reed switch and causes electrical contacts of the reed switch to close or open, to generate a signal for determining whether the first electric unit reaches the preset position.

In some other embodiments, one or more types of the sensors described above may be used in combination according to specific situations to improve the reliability and accuracy of detection. For example, a combination of a micro switch and a photoelectric switch or a combination of a photoelectric switch and a reed switch may be used to implement multiple detection mechanisms to ensure a more accurate and reliable detection of the position of the first electric unit and/or the seat body.

The resistance feedback signal of the first electric unit is a feedback signal sent by the first electric unit when the first electric unit encounters an obstacle or a resistance force. The resistance feedback signal may be an electric current feedback signal sent when an actuator (e.g., motor) of the first electric unit encounters resistance or is blocked, and/or a rotational speed feedback signal of the actuator (e.g., motor) of the first electric unit. When the actuator of the first electric unit encounters resistance or is blocked, the electric current increases and the rotational speed decreases or even becomes 0.

Depending on an actual operation status of the first electric unit of the safety seat, the received first feedback signal may be the in-position feedback signal, the resistance feedback signal, or a combination thereof. When either of the in-position feedback signal and the resistance feedback signal is received, it is determined that the first feedback signal has been received. If neither the in-position feedback signal nor the resistance feedback signal is received, it is determined that the first feedback signal has not been received.

In step S30, a state of the first electric unit is determined if the first feedback signal corresponding to the first electric unit is received.

If the first feedback signal is received, the actual state of the first electric unit is determined. The state of the first electric unit includes a move-in-position state and a faulty state. If the actual state of the first electric unit is the faulty state, a fault prompt is output or other measures are taken, e.g., uploading a fault log, remotely notifying fault maintenance personnel, etc.

Optionally, determining the state of the first electric unit in step S30 specifically includes the following steps.

In step S31, a second feedback signal corresponding to the electric unit is acquired. When the first feedback signal is the in-position feedback signal, the second feedback signal is a movement feedback signal of the electric unit. When the first feedback signal is the resistance feedback signal, the second feedback signal is a position feedback signal of the electric unit.

The movement feedback signal is information reflecting the actual operation status of the electric unit, and may include an electric current feedback signal and a rotational speed feedback signal of the electric unit. The electric current feedback signal reflects an actual value of an electric current in a motor winding or a change in the electric current. According to the electric current feedback signal, the change of motor load and whether the motor operates as expected may be learned. For example, when the electric unit encounters resistance, the electric current increases. The rotational speed feedback signal reflects an actual rotational speed of the motor of the electric unit. When the electric unit encounters resistance, the rotational speed decreases or even becomes 0.

The position feedback signal is information reflecting the position of the seat body. Optionally, the position feedback signal is detected by a first sensor provided on the electric unit or by a second sensor provided on an electric operation path of the seat body.

The first sensor includes, but is not limited to, at least one of a grating, a coding disc, or a Hall sensor. The second sensor includes, but is not limited to, at least one of a micro switch, a photoelectric switch, or a reed switch. For examples of positions for mounting the first sensor and the second sensor, reference can be made to the above description, and the details will not be described herein again. In some other embodiments, one or more types of the sensors described above may be used in combination according to specific situations to improve the reliability and accuracy of detection. For example, a combination of a micro switch and a photoelectric switch or a combination of a photoelectric switch and a reed switch may be used to implement multiple detection mechanisms to ensure a more accurate and reliable detection of the position of the first electric unit and/or the seat body.

In step S32, when the first feedback signal is the in-position feedback signal, it is determined that the second feedback signal is a movement feedback signal of the electric unit, and it is determined whether the electric unit encounters resistance according to the movement feedback signal. If the electric unit encounters resistance, it is determined that the electric unit is in the move-in-position state. If the electric unit does not encounter resistance, it is determined that the electric unit is in a faulty state.

When the in-position feedback signal is received, it indicates that the electric unit may have reached the preset position. If the electric current or rotational speed signal also indicates that the electric unit encounters resistance, it may be determined that the electric unit reaches the preset position and stops further movement. In this case, the electric unit is considered to be in the move-in-position state. If the electric current or rotational speed signal indicates that the electric unit does not encounter resistance, it means that a fault occurs in the system, e.g., a false alarm fault occurs in the first sensor provided on the first electric unit or the second sensor provided on the electric operation path of the seat body. The dual verification mechanisms reduce the possibility of misjudgment and improve the accuracy of determining the state of the electric unit.

In step S33, when the first feedback signal is the resistance feedback signal, it is determined that the second feedback signal is a position feedback signal of the electric unit, and it is determined whether the electric unit reaches a preset position according to the position feedback signal. If the electric unit reaches the preset position, it is determined that the electric unit is in the move-in-position state. If the electric unit does not reach the preset position, it is determined that the electric unit is in a faulty state.

When the resistance feedback signal is received, it indicates that the electric unit may encounter resistance, which leads to an increase in the electric current or a decrease in the rotational speed. In this case, it is determined whether the electric unit reaches the preset position according to the position feedback signal. If the electric unit reaches the preset position, it indicates that the electric unit stops further movement, it is determined that the electric unit is in the move-in-position state. If the electric unit does not reach the preset position, it is determined that the electric unit is in a faulty state, e.g., a leg of a passenger is caught during movement.

Through the multiple stages of feedback signal determination mechanisms, the state of the electric unit can be accurately determined, so that a potential fault can be detected in a timely manner, and a corresponding measure can be taken to rectify the fault or send an alarm, to prevent an erroneous operation caused by false alarm and significantly improve the reliability and accuracy of the system.

In an embodiment, after the first feedback signal corresponding to the first electric unit is received, output of a movement control signal for the first electric unit is stopped or a control signal for controlling the first electric unit to stop operation is output, so that the first electric unit stops moving. As such, if a leg of the passenger is caught during movement, the first electric unit is stopped in a timely manner, to ensure the safety of the passenger.

In step S40, it is determined that a first target action has been completed if the first electric unit is in a move-in-position state.

In an embodiment, the first electric unit includes a rotational movement drive motor, and the first target action is driving the seat body to rotate by a preset angle, e.g., 0°, 90°, 180°, 270°, etc. relative to the base. Available ranges of the preset angle may be set by default in the system, and a user may select a preset angle by which a seat is to rotate in response to one movement control operation. In another embodiment, the first electric unit includes a translational movement drive motor, and the first target action is driving the seat body to translate by a preset distance relative to the base.

In the embodiments of the present invention, the first electric unit and the second electric unit are respectively responsible for the rotation and translation of the seat body, so that the seat can be flexibly adjusted in different dimensions to meet diversified usage requirements of users. With the setting of the corresponding electric control logic including action control logic and feedback signal processing logic for the electric unit, the rotation and translation of the seat body can be controlled precisely and safely. Specifically, in the embodiments of the present invention, the first electric unit is controlled to start to move (e.g., rotate or translate), and it is determined whether a first feedback signal corresponding to the first electric unit is received (step S20) during the movement of the first electric unit. The feedback signal includes an in-position feedback signal and a resistance feedback signal. The in-position feedback signal indicates that the electric unit reaches a preset position. The resistance feedback signal indicates that the electric unit encounters an obstacle or a resistance force during movement. After the first feedback signal is received, an actual state of the first electric unit is further analyzed (step S30). If it is determined that the first electric unit is in the move-in-position state, it may be determined that a first target action has been completed (step S40). This process not only ensures that the seat body can precisely reach the preset position expected by the user, but also avoids misjudgment through the detection of the resistance feedback signal, thereby ensuring passenger safety. In addition, by distinguishing respective functional areas of the first electric unit and the second electric unit, the present invention also provides a more efficient seat space management and a better usage experience. For example, when the seat direction needs to be adjusted, the electric unit responsible for rotation is activated. When the position of the seat in a front-rear direction needs to be changed, the electric unit responsible for translation is turned on. As such, unnecessary power consumption can be avoided, the control logic can be simplified, and the response speed of the system can be improved.

Optionally, in an outward rotation mode, after step S40, the electric control method for the safety seat further includes the following steps.

In step S50, the second electric unit is controlled to operate.

In an embodiment, the first electric unit is configured to drive the seat body to rotate relative to the base, and the second electric unit is configured to drive the seat body to translate relative to the base. In another embodiment, the first electric unit is configured to drive the seat body to translate relative to the base, and the second electric unit is configured to drive the seat body to rotate relative to the base.

In the outward rotation mode, the first electric unit and the second electric unit cooperate to drive the seat body to rotate and then translate relative to the base, or to translate and then rotate relative to the base. After step S40 is executed, i.e., the first target action has been completed, the second electric unit is controlled to operate.

In step S60, it is determined whether a first feedback signal corresponding to the second electric unit is received, where the first feedback signal corresponding to the second electric unit is an in-position feedback signal indicating that the second electric unit reaches a preset position and/or a resistance feedback signal indicating that the second electric unit encounters resistance.

In step S70, a state of the second electric unit is determined if the first feedback signal corresponding to the second electric unit is received.

In step S80, it is determined that a second target action has been completed if the second electric unit is in a move-in-position state.

For details of steps S60 to S80, reference can be made to the description of steps S20 to S40. Related concepts and logic in steps S60 to S80 are substantially the same as those in steps S20 to S40, except that the first electric unit and the second electric unit have different functions, so the details will not be described herein again.

For ease of understanding, an example is given below.

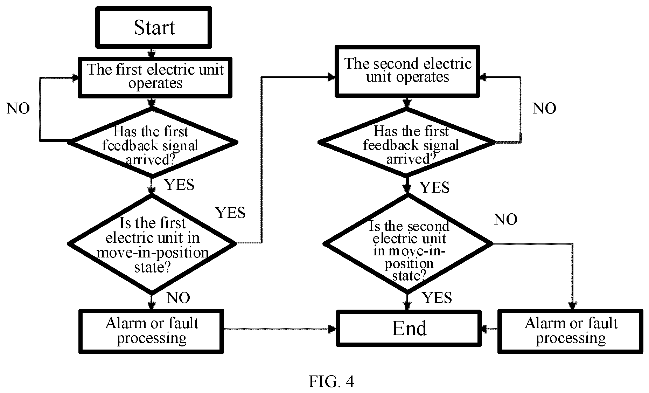

As shown in FIG. 4, in the outward rotation mode, after receiving an instruction input by a user, an electric control system controls the first electric unit to operate and determines whether the first feedback signal corresponding to the first electric unit is received. When determining that the first feedback signal corresponding to the first electric unit is received, the electric control system further determines according to the second feedback signal corresponding to the first electric unit whether the first electric unit is in a faulty state such as encountering resistance or in a move-in-position state. If the first electric unit is in the faulty state, the electric control system sends an alarm or performs fault processing. If the first electric unit is in the move-in-position state, the electric control system controls the second electric unit to operate, and determines whether the first feedback signal corresponding to the second electric unit is received. When determining that the first feedback signal corresponding to the second electric unit is received, the electric control system further determines according to the second feedback signal corresponding to the second electric unit whether the second electric unit is in a faulty state such as encountering resistance or in a move-in-position state. If the second electric unit is in the faulty state, the electric control system sends an alarm or performs fault processing. If the second electric unit is in the move-in-position state, it indicates that an outward rotation operation has been completed.

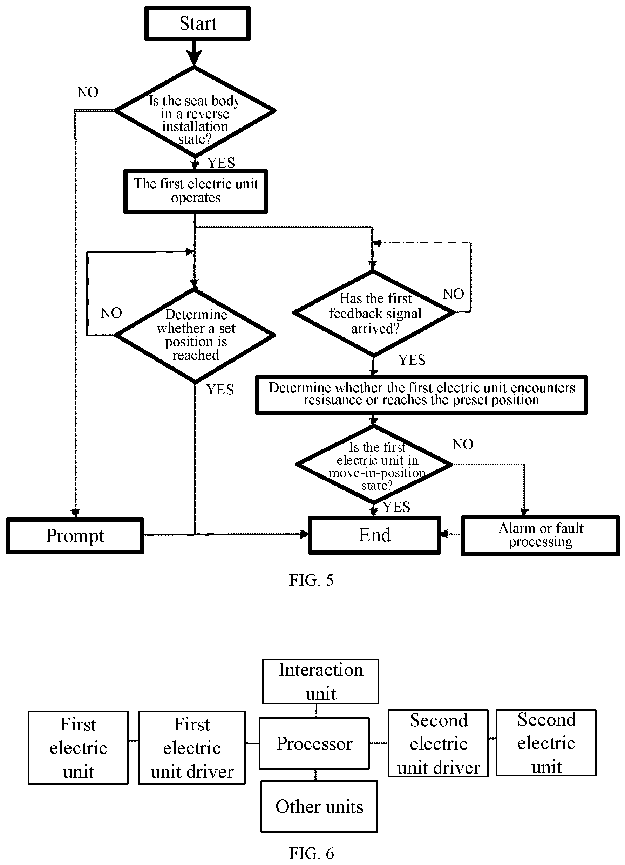

Optionally, in a reverse translation mode, the first electric unit is configured to drive the seat body to undergo a translational movement relative to the base. Referring to FIG. 5, during execution of steps S10 to S40, the following steps are further performed.

It is determined whether the first electric unit reaches a set position, where the set position is set by a user or determined according to passenger information, and the preset position is a preset fixed position.

If the first electric unit reaches the set position, it is determined that the first target action has been completed, and the current process ends. If the first electric unit does not reach the set position, the step of determining whether the first electric unit reaches the set position is performed again.

In other words, in this embodiment, two criteria are set for determining whether the first target action has been completed. One criterion is to determine whether the first electric unit reaches the set position set by the user or the set position determined according to the passenger information. The other criterion is to determine whether the first electric unit is in the move-in-position state after the first feedback signal corresponding to the first electric unit is received. As long as either of the two criteria is satisfied, it is determined that the first target action has been completed. If the first electric unit reaches the set position, it may be determined that the first target action has been completed, because the seat body has translated to a specific position required by the user. If it is determined according to the received first feedback signal corresponding to the first electric unit that the first electric unit is in the move-in-position state, it indicates that the seat body has translated to a limit position. In this case, it is also determined that the first target action has been completed.

The passenger information may include the height, weight, shoulder height, etc. of the passenger. The set position is a variable position determined according to a requirement of the user. Because the set position is a variable position and the adjustment of the set position is stepless adjustment, improper setting or incorrect calculation of the set position by the user may cause the seat body to move beyond a movement range designed for the seat body, and collide with other parts such as the driver seat in the vehicle, resulting in safety risks. Therefore, the preset position is set in step S20 to define a fixed limit position to prevent the first electric unit from moving beyond the designed movement range, to ensure the reliability and safety of the product. In addition, by steps S20 to S30, whether the first electric unit encounters resistance can also be determined, thereby further ensuring the safe control of the seat.

Optionally, referring to FIG. 5, the electric control method for the safety seat further includes:

in the reverse translation mode, determining whether the seat body is in a reverse installation state. FIG. 3 shows the seat body in the reverse installation state.

If the seat body is in the reverse installation state, step S10 and a subsequent step, i.e., direct translation, are performed, including performing the step of determining whether the first electric unit reaches the set position and the subsequent step.

If the seat body is not in the reverse installation state, a reverse installation prompt is output to prompt the user to reversely install the seat or the second electric unit is controlled to operate to drive the seat body to enter the reverse installation state, and then step S10 and the subsequent step are performed.

Optionally, the electric control method for the safety seat further includes:
acquiring shoulder height information of a passenger in the safety seat;
determining whether to enter the reverse translation mode according to the shoulder height information, where when the shoulder height information is less than a preset value, it is determined to enter the reverse translation mode; and/or determining the set position according to the shoulder height information.

The shoulder height information of the passenger may be detected by a sensor (e.g., an infrared sensor, an ultrasonic sensor, a camera, etc.) mounted on the seat, or may be input by the user. In an embodiment, the user may input height information of the passenger, and the electric control system obtains the shoulder height information of the passenger through calculation according to the height information of the passenger.

A preset value is set in advance as a shoulder height threshold. If the shoulder height information of the passenger is less than the preset value, it indicates that the passenger is young and is recommended to ride in the safety seat in a rear-facing position. In this case, the reverse translation mode is entered. If the shoulder height information of the passenger is greater than the preset value, the set position in step S90 is determined according to the shoulder height information of the passenger to ensure that the seat is in a safest and most comfortable position.

It is determined according to the shoulder height information whether to enter the reverse translation mode, and the set position is determined according to the shoulder height information. If it is detected that the shoulder height of the passenger gradually increases as time goes by, the electric control system automatically adjusts a reverse translation distance of the seat, so that the seat gradually translates forward to adapt to the increase of the height of the passenger. When the shoulder height of the passenger reaches a threshold, the electric control system automatically switches the seat from the reverse installation mode to a forward-facing installation mode to ensure the comfort and safety of the passenger.

### Example Scenario:

After the electric control system is turned on, the sensor starts to detect shoulder height information of a passenger and transmits the shoulder height information to the electric control system.

The electric control system determines according to the preset shoulder height threshold whether the passenger requires the reverse translation mode.

If the shoulder height of the passenger is less than the preset value, the reverse translation mode is entered. In the reverse translation mode, the electric control system dynamically adjusts a position to which the seat translates according to the shoulder height information of the passenger. If the shoulder height of the passenger is greater than or equal to the preset value, the seat is installed in a forward-facing orientation, and the set position is determined according to the specific shoulder height information of the passenger.

The electric control system periodically updates the shoulder height information of the passenger and dynamically adjusts the state of the seat according to the latest shoulder height information.

When the shoulder height of the passenger exceeds the preset value, the electric control system automatically switches the seat from the reverse installation mode to the forward-facing installation mode and sends a prompt to the user.

By this method, the electric control system not only can dynamically adjust the state of the seat according to the shoulder height information of the passenger, but also can automatically adapt to the change of the shoulder height of the passenger as the passenger grows, to ensure that the seat is always in the safest and most comfortable position.

An embodiment of the present invention discloses an electric control apparatus for a safety seat. The electric control apparatus includes a computer-readable storage medium storing a computer program and a processor. The processor is configured to process logic of the method of the present invention. The computer program, when read and executed by the processor, causes the processor to implement the electric control method for the safety seat.

As shown in FIG. 6, an embodiment of the present invention discloses an electric control system, which includes the electric control apparatus for the safety seat, an interaction unit, a first electric unit driver, and a second electric unit driver. The interaction unit is configured for the user to input a corresponding instruction, e.g., via a button, touch, voice, etc. The first electric unit driver and the second electric unit driver are respectively configured to control and drive the first electric unit and the second electric unit.

Further, as shown in FIG. 6, the electric control system further includes a power supply unit, a level management unit, a communication unit, etc. The communication unit is configured to connect to a mobile phone, a vehicle, or a cloud server.

An embodiment of the present invention provides a safety seat, including the electric control apparatus for the safety seat or the electric control system described above.

Although the present invention has been disclosed above, the scope of protection of the present invention is not limited thereto. Those skilled in the art can make various changes and modifications without departing from the spirit and scope of the present invention. Such changes and modifications also fall within the scope of protection of the present invention.

## Claims

1. An electric control method for a safety seat, wherein the safety seat comprises a seat body, a base, and electric units, the electric units comprise a first electric unit and a second electric unit, the first electric unit is configured to drive the seat body to undergo a first one of a rotational movement or a translational movement relative to the base, and the second electric unit is configured to drive the seat body to undergo a second one of the rotational movement or the translational movement relative to the base, the electric control method for the safety seat comprising steps of:
controlling the first electric unit to operate;
determining whether a first feedback signal corresponding to the first electric unit is received, wherein the first feedback signal corresponding to the first electric unit is a first in-position feedback signal indicating that the first electric unit reaches a first preset position and/or a first resistance feedback signal indicating that the first electric unit encounters a first resistance;
determining a state of the first electric unit when the first feedback signal corresponding to the first electric unit is received; and
determining that a first target action has been completed when the first electric unit is in a first move-in-position state.

2. The electric control method for the safety seat according to claim 1, wherein in an outward rotation mode, after the step of determining that the first target action has been completed when the first electric unit is in the first move-in-position state, the electric control method for the safety seat further comprises:
controlling the second electric unit to operate;
determining whether a first feedback signal corresponding to the second electric unit is received, wherein the first feedback signal corresponding to the second electric unit is a second in-position feedback signal indicating that the second electric unit reaches a second preset position and/or a second resistance feedback signal indicating that the second electric unit encounters a second resistance;
determining a state of the second electric unit when the first feedback signal corresponding to the second electric unit is received; and
determining that a second target action has been completed when the second electric unit is in a second move-in-position state.

3. The electric control method for the safety seat according to claim 1, wherein in a reverse translation mode, the first electric unit is configured to drive the seat body to undergo the translational movement relative to the base, and the electric control method for the safety seat further comprises:
determining whether the first electric unit reaches a set position, wherein the set position is set by a user or determined according to passenger information, and the first preset position is a preset fixed position; and
determining that the first target action has been completed when the first electric unit reaches the set position.

4. The electric control method for the safety seat according to claim 3, further comprising:
in the reverse translation mode, determining whether the seat body is in a reverse installation state;
when the seat body is in the reverse installation state, performing the step of controlling the first electric unit to operate; and
when the seat body is not in the reverse installation state, outputting a reverse installation prompt, or controlling the second electric unit to operate to drive the seat body to enter the reverse installation state, and performing the step of controlling the first electric unit to operate.

5. The electric control method for the safety seat according to any one of claims 1 to 4, wherein the step of determining the state of the first electric unit further comprises:
acquiring a second feedback signal corresponding to the first electric unit;
when the first feedback signal corresponding to the first electric unit is the first in-position feedback signal, determining that the second feedback signal corresponding to the first electric unit is a first movement feedback signal of the first electric unit, determining whether the first electric unit encounters the first resistance according to the first movement feedback signal, and when the first electric unit encounters the first resistance, determining that the first electric unit is in the first move-in-position state; and
when the first feedback signal corresponding to the first electric unit is the first resistance feedback signal, determining that the second feedback signal corresponding to the first electric unit is a first position feedback signal of the first electric unit, determining whether the first electric unit reaches the first preset position according to the first position feedback signal, and when the first electric unit reaches the first preset position, determining that the first electric unit is in the first move-in-position state; and
the step of determining the state of the second electric unit comprises:
acquiring a second feedback signal corresponding to the second electric unit;
when the first feedback signal corresponding to the second electric unit is the second in-position feedback signal, determining that the second feedback signal corresponding to the second electric unit is a second movement feedback signal of the second electric unit, determining whether the second electric unit encounters the second resistance according to the second movement feedback signal, and when the second electric unit encounters the second resistance, determining that the second electric unit is in the second move-in-position state; and
when the first feedback signal corresponding to the second electric unit is the second resistance feedback signal, determining that the second feedback signal corresponding to the second electric unit is a second position feedback signal of the second electric unit, determining whether the second electric unit reaches the second preset position according to the second position feedback signal, and when the second electric unit reaches the second preset position, determining that the second electric unit is in the second move-in-position state.

6. The electric control method for the safety seat according to claim 5, wherein the first movement feedback signal comprises an electric current feedback signal and/or a rotational speed feedback signal of the first electric unit; and
the second movement feedback signal comprises an electric current feedback signal and/or a rotational speed feedback signal of the second electric unit.

7. The electric control method for the safety seat according to claim 5, wherein the first position feedback signal is detected by a first sensor provided on the first electric unit or by a second sensor provided on an electric operation path of the seat body; and
the second position feedback signal is detected by a third sensor provided on the second electric unit or by a fourth sensor provided on the electric operation path of the seat body.

8. The electric control method for the safety seat according to claim 3 or 4, further comprising:
acquiring shoulder height information of a passenger in the safety seat; and
determining whether to enter the reverse translation mode according to the shoulder height information, wherein when the shoulder height information is less than a preset value, it is determined to enter the reverse translation mode; and/or determining the set position according to the shoulder height information.

9. An electric control apparatus for a safety seat, comprising a non-transitory computer-readable storage medium storing a computer program, and a processor, wherein the computer program, when read and executed by the processor, achieves the electric control method for the safety seat according to any one of claims 1 to 8.

10. A safety seat, comprising the electric control apparatus for the safety seat according to claim 9.
